# EUROPÄISCHE PATENTSCHRIFT

(11) **EP 1 900 957 B1**
(45) Veröffentlichungstag und Bekanntmachung des Hinweises auf die Patenterteilung: **06.07.2011**
(21) Anmeldenummer: 07016248.2
(22) Anmeldetag: 20.08.2007
(51) Int. Cl.: F16D 23/12

(54) **Anordnung zur Betätigung einer Kupplung**
Assembly for actuating a clutch
Dispositif destiné à l'actionnement d'un embrayage

(30) Priorität: 16.09.2006 DE 102006043620
(43) Veröffentlichungstag der Anmeldung: 19.03.2008
(73) Patentinhaber: Schaeffler Technologies GmbH & Co. KG, 91074 Herzogenaurach (DE)
(72) Erfinder: Göppert, Georg, 79336 Herbolzheim (DE); Werner, Olaf, Dr., 77815 Bühl (DE)

(56) Entgegenhaltungen:
- DE-A1- 10 313 435
- DE-A1- 10 316 445
- DE-A1- 10 329 194
- GB-A- 1 547 783

## Beschreibung

Die vorliegende Erfindung betrifft eine Anordnung zur Betätigung einer Kupplung gemäß dem Oberbegriff des Patentanspruches 1.

Eine derartige Anordnung ist aus der GB 1 547 783 A bekannt.

Eine weitere Anordnung zur Betätigung einer Kupplung ist beispielsweise aus der DE 10313435 bekannt. Aufgrund von Reibungen entsteht bei einem starren Einrücksystem immer eine Totzone, d.h. bei Richtungsänderung des Aktorweges ergibt sich an der Kupplung keine Änderung des Kupplungsweges und damit keine Momentenänderung der Kupplung. Auch bei Kenntnis der Totzone kann keine robuste Regelungsstrategie entwickelt werden, die dieses Verhalten kompensiert.

Eine Aufgabe der vorliegenden Erfindung ist es daher, eine Anordnung zur Betätigung einer Kupplung der Eingangs genannten Art anzugeben, welche eine geringere oder möglichst keine Totzone aufweist.

Diese Aufgabe wird erfindungsgemäß gelöst durch eine Anordnung mit den Merkmalen des Patentanspruches 1. Es ist also vorgesehen, gehäuseseitig einer oder mehrerer Reibstellen eine zusätzliche Elastizität anzuordnen, so dass die Reibstellen nicht mehr starr gegen eine gehäusefeste Lagerung, sondern elastisch gegenüber dem Gehäuse angeordnet sind. Die Anordnung umfasst vorzugsweise Mittel zur Verschiebung des Übertragungsmittels, insbesondere einen Aktorhebel, sowie ein Mittel, das von dem Übertragungsmittel verschoben wird, vorzugsweise ist dies eine Hebelfeder, die in Wirkverbindung mit der Kupplung steht. Durch die Federn kann das Führungsrohr elastisch gegenüber der Grundplatte verschoben werden. Die Verbindungsmittel umfassen vorzugsweise Bolzen, die die Relativverschiebung zwischen Führungsrohr und Grundplatte begrenzen, wobei die Bolzen vorzugsweise Schraubenbolzen sind, die gleichzeitig eine axiale Führung sowie den Anschlag bilden.

Bevorzugte Ausgestaltungen sind Gegenstand der abhängigen Ansprüche.

Im Folgenden wird ein Ausführungsbeispiel der Erfindung anhand der beiliegenden Zeichnungen erläutert. Dabei zeigen:
- Fig. 1: eine schematische Darstellung eines Hebelsystems;
- Fig. 2: ein mechanisches Ersatzschaltbild eines Hebelsystems nach Stand der Technik;
- Fig. 3: eine Hysteresekurve zu dem mechanischen Ersatzschaltbild nach Fig. 2;
- Fig. 4: ein mechanisches Ersatzschaltbild eines erfindungsgemäßen Hebelsystems;
- Fig. 5: eine Hysteresekurve zu dem mechanischen Ersatzschaltbild nach Fig. 4.

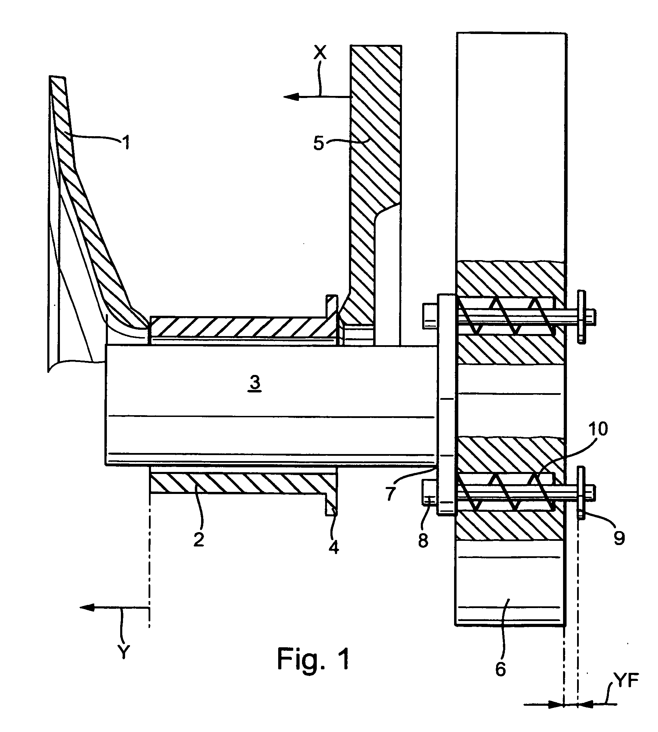

Fig. 1 zeigt eine Skizze eines Ausrücksystems für eine Fahrzeugkupplung im Schnitt. Es handelt sich hierbei um einen so genannten Hebelausrücker, wie er beispielsweise aus der DE 10313435 an sich bekannt ist. Eine hier nicht dargestellte zugehörige Kupplung ist beispielsweise aus der DE 10316445 bekannt. In Fig. 1 skizzenhaft im Schnitt dargestellt ist eine Hebelfeder 1 zur Betätigung der nicht näher dargestellten Kupplung im Antriebsstrang eines Kraftfahrzeuges zwischen Verbrennungskraftmaschine und Untersetzungsgetriebe. Die Hebelfeder 1 wird in Richtung des Betätigungsweges Y mittels eines Einrückkolbens 2, der verschiebbar in Richtung des Betätigungsweges Y auf einem Führungsrohr 3 angeordnet ist, betätigt.

Der Einrückkolben 2 weist an seiner der Hebelfeder 1 abgewandten Seite eine Scheibe 4 auf, gegen die ein Aktorhebel 5 zur Betätigung der nicht dargestellten Kupplung drückt. Der Aktorhebel 5 verschiebt bei dessen Betätigung den Einrückkolben 2 und damit auch die Hebelfeder 1 zur Betätigung der hier nicht dargestellten Kupplung. Bei der Betätigung gleitet der Einrückkolben 2 auf dem Führungsrohr 3. Bei dieser Gleitbewegung tritt Reibung auf, welche unabhängig von einer eventuellen Schmierung und einer eventuell besonders glatt ausgestalteten Oberfläche der Reibpartner einen Anteil an so genannter trockener Reibung aufweist. Bei trockener Reibung ist zunächst, wie aus der Physik bekannt ist, eine Haftreibung zu überwinden, was eine so genannten Losreißkraft erfordert, um eine Gleitbewegung auszulösen. Die danach einsetzende Gleitreibung ist geringer als die Haftreibung. Dies hat zur Folge, dass für eine Relativbewegung des Einrückkolbens 2 gegenüber dem Führungsrohr 3 zunächst die Losreißkraft aufzubringen ist.

Erfindungsgemäß ist nun vorgesehen, das Führungsrohr 3 nicht mehr starr mit einer Grundplatte 6 zu verbinden, sondern das Führungsrohr 3 federelastisch in Richtung des Betätigungsweges Y verschiebbar um einen begrenzten Verschiebeweg YF an der Grundplatte 6 anzuordnen. Dazu weist das Führungsrohr einen Befestigungsflansch 7 auf, der starr mit dem Führungsrohr 3 verbunden ist, wobei der Befestigungsflansch 7 federelastisch mit der Grundplatte 6, die gehäusefest gegenüber einer Kupplungsglocke oder einem Getriebegehäuse und damit starr befestigt ist, verbunden ist. Die federelastische Verbindung zwischen dem Führungsrohr 3 bzw. dem Befestigungsflansch 7 und der Grundplatte 6 ist um einen Weg YF in Richtung des Betätigungsweges Y gegen eine Federkraft verschiebbar. Die federelastische Verbindung kann beispielsweise so ausgelegt sein, dass Führungsbolzen 8 in Durchgangsbohrungen durch den Befestigungsflansch 7 und die Grundplatte 6 gesteckt sind und mit Scheiben 9 versehen sind, so dass hier ein Verschiebeweg um den Weg YF möglich ist. Die Führungsbolzen 8 und die Scheiben 9 können mittels Muttern miteinander verschraubt sein. Die Durchgangsbohrungen weisen zusätzlich nicht durchgehende, also sacklochartig eingebrachte Stufenbohrungen auf, in denen Federn 10 angeordnet sind. Die Federn sind beispielsweise an der Grundplatte 6 sowie an dem Befestigungsflansch 7 befestigt, beispielsweise verschraubt oder geklemmt, und wirken so als Zug- und Druckfedern in Richtung des Betätigungsweges Y. Alternativ können die Federn auch z.B. nur als Druckfedern ausgebildet sein und dabei abwechselnd so angeordnet sein, dass diese in Richtung Y zw. Entgegen der Richtung Y zusammengedrückt werden. In allen Fällen weist das Führungsrohr 3 ein Spiel gegen Federkraft sowohl in Richtung Y als auch in die Gegenrichtung auf.

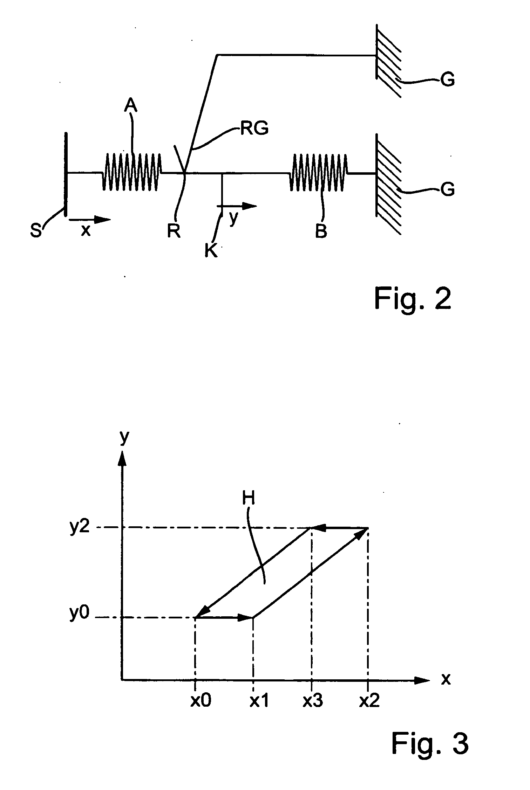

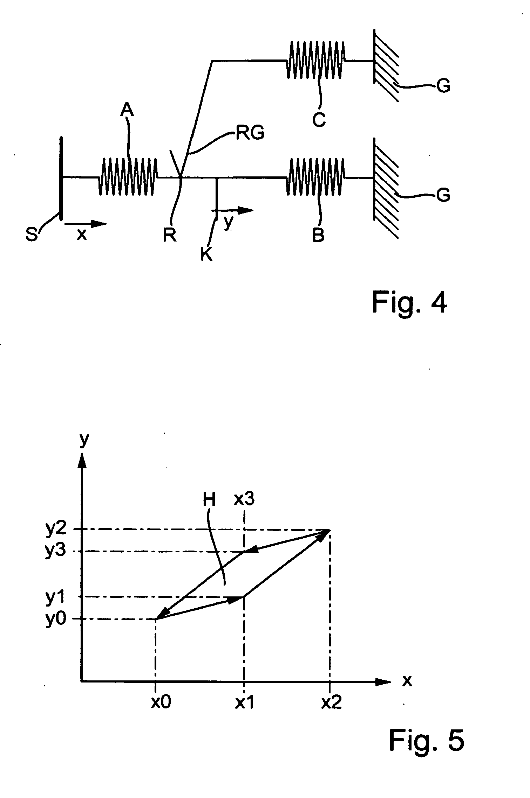

Fig. 2 zeigt ein mechanisches Ersatzschaltbild eines Hebelsystems ohne verschiebbares Führungsrohr 3. Bei dem Ersatzschaltbild der Fig. 2 sind die Elastizitäten der Übertragungsstrecke Aktorhebel Bei dem Ersatzschaltbild der Fig. 2 sind die Elastizitäten der Übertragungsstrecke Aktorhebel 5 - Einrückkolben 2 -Hebelfeder 1 schematisch aufgeteilt in zwei Federn, eine Feder A, die sämtliche Elastizitäten des Aktorhebels und des Aktors zu dessen Betätigung wie einem elektrischen Antrieb, Getriebeelementen und dergleichen umfasst, sowie eine Feder B, die sämtliche Elastizitäten der Hebelfeder 1 und weiterer Elastizitäten der nicht dargestellten Kupplung umfasst. Die verschiebbare Lagerung des Einrückkolbens 2 auf dem Führungsrohr 3 ist als Reibungsstelle R mit trockener Reibung dargestellt, wobei die Reibungsstelle R ein gehäusefestes Reibelement RG umfasst. Gehäusefeste Lagerungen sind jeweils mit G bezeichnet. Die Seite S entspricht dem Stellerweg eines nur schematisch anhand des Stellerweges X dargestellten Aktors zur Betätigung des Aktorhebels 5, ein durch einen senkrechten Strich angedeuteter Punkt K entspricht dem Kupplungsweg Y in Fig. 1. Bei einer Bewegung des Aktors (Stellers) S um einen Weg X (Aktorweg, Stellerweg) ist zunächst die trockene Reibung an der Stelle R gegen die Elastizität der Feder A zu überwinden, bis eine Bewegung des Einrückkolbens 2 und - abzüglich der dazwischen angeordneten Elastizität - der Kupplung um einen Weg Y stattfindet. Dieser Effekt sorgt dafür, dass eine Hysterese gemäß Fig. 3 auftritt. Wertepaare X/Y sind in Fig. 3 und 5 jeweils mit gleichem Index bezeichnet. In Fig. 3 ist auf der Abszisse der Weg X des Stellers und auf der Ordinate der Kupplungsweg Y aufgetragen. Durch die trockene Reibung ist, ausgehend von einem Stellerweg X = X0 bis X = X1 kein Weg Y in der Kupplung zu beobachten, der Kupplungsweg bleibt bei einem Wert Y0. Erst ausgehend von einem Weg X1, bewirkt eine Erhöhung des Stellerwegs X eine Auswirkung auf den Kupplungsweg Y. Gleiches gilt bei Erreichen eines Wertes X2 des Stellers und einer Umkehr der Bewegungsrichtung, hier bleibt zunächst der Kupplungsweg Y konstant und verringert sich erst nach Zurücklegen eines bestimmten Stellerweges. Um diese zu verringern wird nun erfindungsgemäß vorgeschlagen, in den Reibungszweig RG gemäß Fig. 2 eine weitere Elastizität C anzuordnen. Ein derartiges Hebelsystem ist als mechanisches Ersatzschaltbild in Fig. 4 dargestellt. Eine mögliche Ausführungsform zur Anordnung dieser Elastizität ist das Ausführungsbeispiel gemäß Fig. 1. Bei der Elastizität C handelt es sich wie bei den Elastizitäten A und B um ein federelastisches Element. Die Elastizität C wird im Ausführungsbeispiel der Fig. 1 durch die federelastische Verschiebbarkeit des Führungsrohres 3 gegenüber der Grundplatte 6 bewirkt, also durch die Parallelschaltung der Federn 10. Der zwischen beiden mögliche Verschiebeweg YF ist so ausgelegt, dass die Federkraft der Federn 10 bei einer maximalen Verschiebung des Führungsrohres 3 gegenüber der Grundplatte 6, also einem vollen Ausnutzen des Weges YF, größer würde als die Haftreibungskraft zwischen Einrückkolben 2 und Führungsrohr 3. Vor einem Anschlag des Führungsrohres 3 an die Grundplatte 6, bevor also der maximale Verschiebeweg ausgenutzt ist, wird die Haftreibung zwischen Führungsrohr 3 und Einrückkolben 2 überwunden.

Fig. 5 zeigt ein Diagramm des Stellweg X über dem Kupplungsweg Y entsprechend der Fig. 3. Bei der erfindungsgemäßen Anordnung ist die von der Hysteresekurve eingeschlossene Fläche kleiner als bei dem System nach Stand der Technik. Zudem verlaufen die im Stand der Technik parallel zur Abszisse verlaufenden Teile der Kurve, in Fig. 3 von X0, Y0 nach X1, Y0 und von X2, Y2 nach X3, Y2, nunmehr mit einer durch die Elastizität der Feder C bestimmten Steigung von X0', Y0'nach X1', Y1' und von X2', Y2'nach X3', Y3'. Bei einer Veränderung des Aktorweges X erfolgt nun also an jedem Punkt der Hysteresekurve eine Veränderung des Kupplungsweges Y, es gibt keine Bereiche der Hysteresekurve mit Steigung null.

### Bezugszeichenliste

- 1: Hebelfeder
- 2: Einrückkolben
- 3: Führungsrohr
- 4: Scheibe
- 5: Aktorhebel
- 6: Grundplatte
- 7: Befestigungsflansch
- 8: Schraube
- 9: Mutter
- 10: Feder

- X: Stellweg des Aktors
- Y: Betätigungsweges der Kupplung
- YF: Verschiebeweg

## Patentansprüche

1. Anordnung zur Betätigung einer Kupptung in einem Antriebsstrang eines Kraftfahrzeuges, umfassend einen Einrückkolben (2), der gegenüber einem Führungsrohr (3) in einer Betätigungsrichtung (Y) verschiebbar gelagert ist, wobei das Führungsrohr (3) in Betätigungsrichtung (Y) federelastisch gegenüber einem Gehäuse (6) gelagert ist, indem das Führungsrohr (3) mit Verbindungsmitteln (8, 9,10) in Betätigungsrichtung elastisch mit einer gehäusefesten Grundplatte (6) verbunden ist, **dadurch gekennzeichnet, dass** die Verbindungsmittel Federn (10) umfassen, die in Zug- und Druckrichtung belastbar mit dem Führungsrohr (3) sowie der Grundplatte (6) verbunden sind.

2. Anordnung zur Betätigung einer Kupplung nach Anspruch 1, **gekennzeichnet durch** einen Aktorhebel (5) als ein Mittel zur Verschiebung des Einrückkolbens (2) sowie **durch** eine mit der Kupplung in Wirkverbindung stehende Hebelfeder (1) als ein Mittel, das von dem Einrückkolben (2) verschoben wird.

3. Anordnung nach Anspruch 1 oder 2, **dadurch gekennzeichnet, dass** die Verbindungsmittel Bolzen (8) umfassen, die die Relativverschiebung zwischen Führungsrohr (3) und Grundplatte (6) begrenzen.

4. Anordnung nach Anspruch 3, **dadurch gekennzeichnet, dass** die Bolzen (8) Schraubenbolzen sind, die gleichzeitig eine axiale Führung bilden.

## Claims

1. Arrangement for actuating a clutch in a drive train of a motor vehicle, comprising an engagement piston (2) which is mounted such that it can be displaced in an actuating direction (Y) with respect to a guide tube (3), the guide tube (3) being mounted resiliently in the actuating direction (Y) with respect to a housing (6), by the guide tube (3) being connected elastically in the actuating direction by way of connecting means (8, 9, 10) to a base plate (6) which is fixed to the housing, **characterized in that** the connecting means comprise springs (10) which are connected to the guide tube (3) and the base plate (6) such that they can be loaded in the tensile and compression directions.

2. Arrangement for actuating a clutch according to Claim 1, **characterized by** an actuator lever (5) as a means for displacing the engagement piston (2), and by a lever spring which is operatively connected to the clutch, as a means which is displaced by the engagement piston (2).

3. Arrangement according to Claim 1 or 2, **characterized in that** the connecting means comprise pins (8) which limit the relative displacement between the guide tube (3) and the base plate (6).

4. Arrangement according to Claim 3, **characterized in that** the pins (8) are threaded pins which at the same time form an axial guide.

## Revendications

1. Agencement pour l'actionnement d'un embrayage dans une chaîne cinématique d'un véhicule automobile, comprenant un piston d'embrayage (2), qui est monté de manière déplaçable dans une direction d'actionnement (Y) par rapport à un tube de guidage (3), le tube de guidage (3) étant monté dans la direction d'actionnement (Y) de manière élastique à ressort par rapport à un boîtier (6), le tube de guidage (3) étant pour cela connecté par des moyens de connexion (8, 9, 10) de manière élastique dans la direction d'actionnement à une plaque de base (6) fixée au boîtier, **caractérisé en ce que** les moyens de connexion comprennent des ressorts (10) qui sont connectés, de manière à pouvoir être sollicités dans la direction de traction et de compression, au tube de guidage (3) ainsi qu'à la plaque de base (6).

2. Agencement pour l'actionnement d'un embrayage selon la revendication 1, **caractérisé par** un levier d'actionneur (5) servant de moyen de déplacement du piston d'embrayage (2) ainsi que par un ressort de levier (1) en liaison fonctionnelle avec l'embrayage, servant de moyen déplacé par le piston d'embrayage (2).

3. Agencement selon la revendication 1 ou 2, **caractérisé en ce que** les moyens de connexion comprennent des boulons (8) qui limitent le déplacement relatif entre le tube de guidage (3) et la plaque de base (6),

4. Agencement selon la revendication 3, **caractérisé en ce que** les boulons (8) sont des boulons de vis qui forment en même temps un guidage axial.
